Europäisches Patentamt

European Patent Office

Office européen des brevets

(11) Publication number: **0 430 901 A2**

# EUROPEAN PATENT APPLICATION

(21) Application number: 90830503.0

(22) Date of filing: 05.11.90

(51) Int. Cl.5: **G01N 1/28, G01N 33/18**

(30) Priority: 06.11.89 IT 4852889

(43) Date of publication of application:
05.06.91 Bulletin 91/23

(84) Designated Contracting States:
AT BE CH DE ES FR GB GR LI LU NL SE
Bulletin

(71) Applicant: CENTRO SVILUPPO MATERIALI S.p.A.
P.O. Box 10747 Via di Castel Romano 100-102
I-00129 Roma(IT)

(72) Inventor: Novaro, Ezio
/Cir.ne Clodia 169
00195 Roma(IT)
Inventor: Derchi, Domenico
Via Ovidio 84
Pomezia, (Roma)(IT)
Inventor: Tomellini, Renzo
Via R. Tonoli 10
Roma(IT)

(74) Representative: Mariani, Giulio
c/o Centro Sviluppo Materiali SpA P.O. BOX 10747
I-00100 Roma Eur(IT)

(54) Device for electrochemical measurements in real time of chemical and physical parameters in a moist gaseous atmosphere.

(57) Numerous factors having an influence on the life of materials and the wellbeing of people are influenced by the dispersion of acidic or aggressive substances in a moist gaseous atmosphere. Measure ment of the concentration of these substances thus marks an important step ahead in the understanding of phenomena having a bearing on materials' behaviour and pollution abatement.

The device of the present invention allows simple, rapid measurements in moist gaseous atmospheres -even in very restricted environments- by employing a miniaturized cooling cell that ensures the condensation of water on an appropriate surface equipped with the necessary measurement and reference electrodes.

EP 0 430 901 A2

# DEVICE FOR ELECTROCHEMICAL MEASUREMENTS IN REAL TIME OF CHEMICAL AND PHYSICAL PARAMETERS IN A MOIST GASEOUS ATMOSPHERE

This invention refers to a device for making real time electrochemical measurements of chemical and physical parameters in moist gaseous atmospheres. More precisely, it concerns a miniaturized device based on the use of cooling equipment that causes the condensation of moisture present in the environment under examination, thus allowing the measurement of chemical and physical parameters such as pH, ions concentrations (e.g. chlorine, fluorine, cyanide, sulphide, etc.), relative humidity, temperature, conductivity, air speed, etc.

To date it has not been possible to measure such parameters directly, either in the open air or in microenvironments. Indirect measurements are too complex to be made in real time in microenvironments, while various attemps to employ sensors simply exposed to the air have not given satisfactory results.

Simple, effective solutions are thus needed to monitor the chemical and physical state of different environments and of the atmosphere, particularly because of an ever increasing pollution, and of ever more pressing demands for quality products. For instance, the monitoring of relative humidity in microenvironments such as the box structures in motor vehicles is a factor having a bearing on improved car design, to avoid even serious perforating corrosion, for instance by introducing appropriate condensation drain holes or ventilation holes in relevant parts of the structure.

Similarly, the monitoring of acid rain is particularly important where atmospheric pollution control is concerned, and this should normally start right from the very first drops that fall. If it is necessary to wait to collect enough rain to perform a pH measurement using existing apparatus, the samples obtained can be excessively dilute and thus not wholly significant.

The aim of this invention is to avoid such drawbacks by providing a very small, highly sensitive device for making real time eletrochemical measurements of chemical and physical parameters in moist gaseous atmospheres and including at least one reference electrode and at least a means of connection with measuring electrodes set on a plate facing onto the environment under control and connected to a cooling cell.

According to the present invention a plate of electrically insulated, heat conducting material having a first face and a second face, has cooling means in contact with the first face, while the second face bears at least one measuring electrode and at least one means of connection to reference electrodes.

These cooling means are preferably miniaturized and consist of a cooling cell designed to operate on the basis of the Peltier effect.

Said plate can consist of ceramic material or of a metal body having a coating that does not conduct ectricity, or it can take the form of a layer of paint on the cold face of the Peltier cell.

The device is rendered operational by switching on a dc supply to the cell. This results in the face in contact with the electrode-bearing plate being cooled, while the other face is warmed proportionately. Cooling of the plate causes the moisture present to condense thereon. The composition of the film of water formed in this manner is characteristic of that of the surrounding atmosphere, since it contains the ions present therein. The concentration of these ions can thus be ascertained via appropriate measuring and reference electrodes.

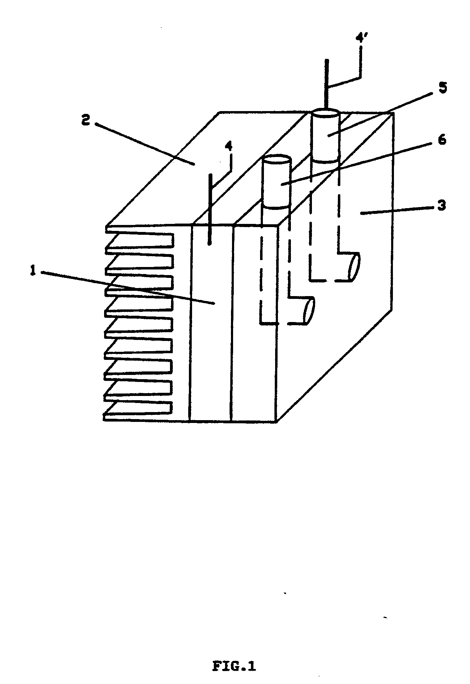

The invention is descibed in greater detail below with the aid of a Figure illustrating a non-limiting embodiment thereof. As can be seen from the Figure, a cooling cell (1) has its hot face in contact either directly with the air (not shown in the Figure) or with a radiator (2) or with one or several other cooling cells (not shown in the Figure), to increase the cooling efficiency while its cold part is in contact with a plate (3) on which are set measuring electrodes (5 and 7) and reference electrodes (6 and 8).

Having made the required measurements, the power supply to the cell is shut off, the water evaporates and the system is ready for a new measurement.

Preferably, however, in order to prevent any eventual build-up of substances whose concentration has to be measured, it is as well to avoid evaporation of the condensate. To ensure this the cell can be placed in the vertical position so that the condensate formed drips away continuously, thus permitting successive measurements.

This device can therefore be advantageously employed to make continuous measurements of chemical and physical parameters in air, in confined environments and also in microenvironments.

The proposed invention is interesting because it is so practical, simple, durable and economical. Moreover, it can be interfaced with electronic units for the direct collection of data measured, as well as for transmitting the data via radio to a collecting station, especially when measurem ents have to be made in difficult zones, while in the case of continuous measurements it can provide useful information on corrective action to be timely taken.

## Claims

1. Device for real time electrochemical measurements of chemical and physical parameters in moist gaseous atmospheres, highly sensitive, and very small, characterized in that it comprises in relation of cooperation an electrically insulated plate of heat conductive material having a first face and a second face, cooling means in contact with said first face, at least one element providing connection to reference electrodes and at least one measuring electrode, said connecting element and said measuring electrode terminating on, said second face.

2. Device as per claims 1, characterized in that said cooling means consist of at least one Peltier cell.

3. Device as per claims 2, characterized by the fact that said Peltier cell, provided with a cooled face and a heated face, has a heat dispersing element in contact with said heated face.

**FIG.1**